# EUROPEAN PATENT APPLICATION

(11) **EP 1 318 003 A1**
(43) Date of publication of application: **11.06.2003**
(21) Application number: 03075756.1
(22) Date of filing: 18.06.1999
(51) Int. Cl.: B29C 33/38, G05B 19/42, B44F 1/06, B44C 1/22, A23G 3/00, A23G 3/28, B44C 3/04

(54) **Lithophane-like article and method of manufacture**

(30) Priority: 08.10.1998 GB 9821658; 21.10.1998 GB 9823062
(62) Divisional of application: 99928058.9
(71) Applicant: Mystix Limited, Cornwall PL27 7NZ (GB)
(72) Inventor: Dufort, John Francis, Cornwall PL27 7NZ (GB)
(74) Representative: Howe, Steven

(57) **Abstract**

A lithophane-like article and a method of forming such an article, for example formed of plastics, confectionery product, soap, wax or liquid, by determining the intensity of different points of an original image (1), and forming the article with a thickness at each point of the article related to the intensity of the corresponding point of the original image (1).

## Description

In the late nineteenth and early twentieth centuries, lithophanes were formed from porcelain. These objects were pieces of porcelain which were formed with sections of various thickness. The porcelain was fired at a very high temperature, resulting in the porcelain becoming translucent. By shining light through the porcelain from behind, as a result of the different thicknesses of the porcelain and therefore the different transmissivity of light through the porcelain, an image is seen. In particular, the thicker areas of the porcelain are less transmissive to light than thinner areas, and so appear darker.

In the early part of the twentieth century, lithophanes were formed by hand engraving wax with the relief corresponding to the areas of different brightness of the desired image. These wax models were used to form a mould which could be used to mould ceramic to form the lithophane. Such lithophanes were used as window hangings, fire screens, teapot warmers and lamps.

From around the 1930's, there was no longer any great interest in lithophanes, and they are rarely seen today.

The present invention relates to an article having different thicknesses corresponding to the different intensities of an image, and to a method of forming such an article, the resulting article having a similar appearance to a porcelain lithophane.

According to a first aspect of the present invention, a method of forming an article comprises the steps of:
determining the relative intensity at different points of an image; and
forming the article with different thicknesses corresponding to the different intensities of the original image from a translucent material.

In accordance with the present invention, it is possible to replicate a desired image, for example a photograph or computer generated image, into an article such that the image can be observed with suitable lighting. This is possible by virtue of the step of determining the relative intensity of different points of the original image and the automatic use of this to form the final article with a variable thickness corresponding to the relative intensities. This differs from lithophanes which were generated as works of art in their own right.

It is preferred that the determination of the relative intensity of the different points of the image is achieved by scanning the image, for example into a computer. In this case, the original image may be divided into a number of picture elements, and an intensity value for each element determined. The intensity values are then preferably stored in memory for subsequent use in forming the article. In this way, the original image can accurately be recreated in the article. By storing the intensity values in a memory, it is possible to process the values, for example to normalise these, or vary these for different materials. It is also possible to enlarge or reduce the image, or to edit the image, for example by deleting parts of the image or combining images.

It is preferred that the step of forming the article comprises the step of forming a mould, and moulding the article in the mould. By moulding the article, for example by injection moulding techniques, mass reproduction is possible. This allows the production of large volumes of product at a low cost, and this in turn increases the number of uses for the article.

Preferably the step of forming the mould is carried out by a numerically controlled engraving machine, such as a high speed three axis numerically controlled engraving machine. This can be loaded with the relative intensity values of the desired mould, and can cut any desired number of moulds. If a non-flat article is to be produced, a four or five axis numerically controlled engraving machine may be needed. Alternatively, the mould may be formed by a laser cutting machine, by spark erosion in which a spark erosion electrode having a relief corresponding to the finished article is formed and is used to form the mould, or by stereo lithography or other techniques. The use of these methods for forming the mould are especially suited to a method in which the data representing the relative intensity of the picture elements is held in a digital memory. In this case, the data can be used directly for defining, for example, the cutter toolpaths or the stereo lithography. This allows for the rapid, reproducible and accurate formation of moulds for use in producing the finished articles. The accuracy allows greater detail to be seen in the finished article.

The mould is preferably formed from metal. This allows materials to be moulded which are heated to a high temperature to melt the material before being cooled to set. Such a mould may also have a long life to allow for repeated mouldings. Alternatively, the mould may be a flexible mould, for example formed of rubber or polyethane. This is especially suitable where the article is made from a fragile material, as it allows the article to be removed from the mould easily, for example by peeling off the mould, without damaging the article.

It is preferred that a number of moulds are formed from a single mould block to allow a large number of articles to be moulded simultaneously.

In an alternative example of the present invention, the article is formed by machining or otherwise forming the article directly from a translucent material based on the determined relative intensity so that the article has a relief such that the thickness corresponds to the different intensities of the desired image.

This method of forming articles does not allow for the same economy of scale and mass reproduction associated with moulding, but is able to produce limited quantities of articles having a specific design. For example, a person's image can be obtained from a digital camera or from a scanned photograph, and machined into an article. This will be difficult to replicate, and so can be used as a security or identification device.

The article may be formed by a number of methods, including those described above for the forming of a mould, including engraving by a numerically controlled engraving machine, by laser cutting, spark erosion or stereo lithography.

In a further example, the determined relative intensity data is used to form a die, punch or stamp. The die, punch or stamp, as with the mould, may be formed by machining, such as by a numerically controlled engraving machine, by laser cutting, spark erosion or by stereo lithography. To form the article, the die, punch or stamp is pressed onto the surface of the material from which the article is to be formed, and leaves an imprint in the material, giving the desired thickness variation for the article. Depending on the material used to form the article, the punch, die or stamp may be heated prior to being pressed into the material. These techniques are particularly suitable for the formation of articles in which a moulding step is difficult in the context of the normal production process.

A material which is especially suitable for stamping is chewing gum which is usually formed in strips that are cut to size. The stamping of a relief in a strip of chewing gum can be linked with the cutting of the strip to the required size. Especially where the article is formed in a strip, the punch, die or stamp may be provided on a roller.

Preferred materials from which the article may be formed include plastics, confectionery products including chewing gum, candy and chocolate, wax, soap and liquids.

A particularly preferred material is plastics. Such an article is advantageous over a porcelain lithophane in that it is significantly cheaper and easier to manufacture, does not require firing at a high temperature and is less susceptible to damage. Further, by selection of a suitable material, it is possible to see the image clearly when the article is back lit by a particular type or intensity light source.

In the case of liquid, the liquid may remain in the mould to maintain the different thicknesses.

According to an alternative example of the present application, there is provided a plastics article having different thicknesses at different positions corresponding to the relative intensity of an image, in which the plastics article transmits or emits light with an intensity corresponding to the thickness of the material.

The material from which the plastics articles are formed should be transparent or translucent, for example may be polystyrene, polypropylene, styrolux, ABS or acrylic or an epoxy, polystyrene or polyurethane resin. The plastics material is preferably filled with a filler material such as china clay, chalk or other filter to give the desired effect.

The use of plastics is preferred since this is inexpensive, can be formed to the desired shape easily, for example by heating to make the material mouldable and cooling to set, and is resilient, making it less likely to break than porcelain. Plastics materials may also be used for a wide range of products for use in a large number and variety of environments.

Alternative materials from which the article may be formed include confectionery products, wax, soap and liquid.

Where confectionery products, for example chocolate, candy or chewing gum, is used, the finished articles can be eaten. As many confectionery products are shaped to give desirable appearance, little if any additional cost is required to form the product into an article in accordance with the present invention, but the resulting article has a very attractive appearance, increasing its value.

Where the article is formed from liquid, it is preferred that the article comprises a container formed from substantially transparent material in which the cross-sectional area between opposite walls corresponds to the relative intensity of the image, and liquid provided in the container. The container may be in the form of a bottle. The liquid may be a beverage or detergent or cosmetic, such as shampoo. To give the desired effect, the liquid should preferably be of uniform density and transmissivity, and should be translucent.

The material from which the article is formed may include luminescent particles or may be coated on the back by a luminescent layer. In this case, the luminescent particles emit light, and it may therefore be possible to view the image without light from a separate source being shone through the article. Where luminescent particles are included, the lighter parts of the image may correspond to the thicker parts of the article and the darker parts to the thinner parts as, in this case, in the thicker regions there will be a greater amount of luminous particles and therefore there will be a brighter section.

The article may be coloured. In this case, the article may be coloured with a single colour to give an overall tint, or there may be different colours at different parts of the article to give parts of different colour.

Where the colour is a single colour, this may be achieved by including pigment in the material used for the moulding. Alternatively, a coloured layer may be formed on a surface of the article. One surface of the article, for example the rear surface, will usually be planar, and therefore a coloured layer can be formed on this surface easily, for example by transfer or sublimation printing or by an ink jet or silk screen printing technique. This will acts as a filter to the light passing through the article. Alternatively, a separate layer may be provided with the appropriate colours which is provided behind or in front of the article. This allows the colour to be formed separately.

The article may be formed from heat sensitive material. In this case, the image may only be seen when the article is heated. For example, if the article is formed into a lamp shade, it may be heated by the lamp to become translucent.

The article according to the present invention can be used for a number of purposes, including character promotions, key rings, inserts to be provided in cereal packets, light shades, plates, cups, toys, pictures etc. Where the article is made from an edible material, such as chocolate or candy, the article may be sold as a novelty food item. A candle can be formed where the article is made from wax.

By use of suitable processing techniques, the article may be a non-flat or three-dimensional article. It is also possible to produce a stereoscopic image by having two side by side articles having substantially the same image but from a slightly different perspective, each of the images being viewed by a different one of the viewer's eyes.

In an alternative example, both surfaces of the article include relief. In this case, the overall thickness of the material at any point corresponds to the relative intensity of the image at that point, however the article is recessed on both sides. This gives an article which can be viewed from either side. Where the article includes one flat surface and the relief is provided exclusively in the other surface, the image can only be viewed properly from the relieved side of the article. Where both surfaces of the article include relief, it is preferred that the article is recessed on both sides to a generally similar amount. This eases the manufacture of the article. For example, where the article is formed in a mould, the two parts of the mould may be engraved as a mirror image of each other.

The article may be formed as a single piece, or may be formed in two parts which are fixed back-to-back. Where the article is formed in two parts and these are fixed back-to-back, such fixing may be by means of an adhesive, or may be by a mechanical interconnection or clamp. Where the article is formed in two parts, it is possible to provide a coloured or luminescent layer between the two parts before these are assembled together to give the desired colour filter or radiation of light as required.

Examples of the present invention will be described in accordance with the accompanying drawings, in which :
Figure 1 shows a schematic view of the system for forming an article;
Figure 2 shows a cross-section through a mould for forming an article;
Figure 3 shows a cross-section through an alternative example of an article; and,
Figure 4 shows a bottle of liquid including the features of the present invention.

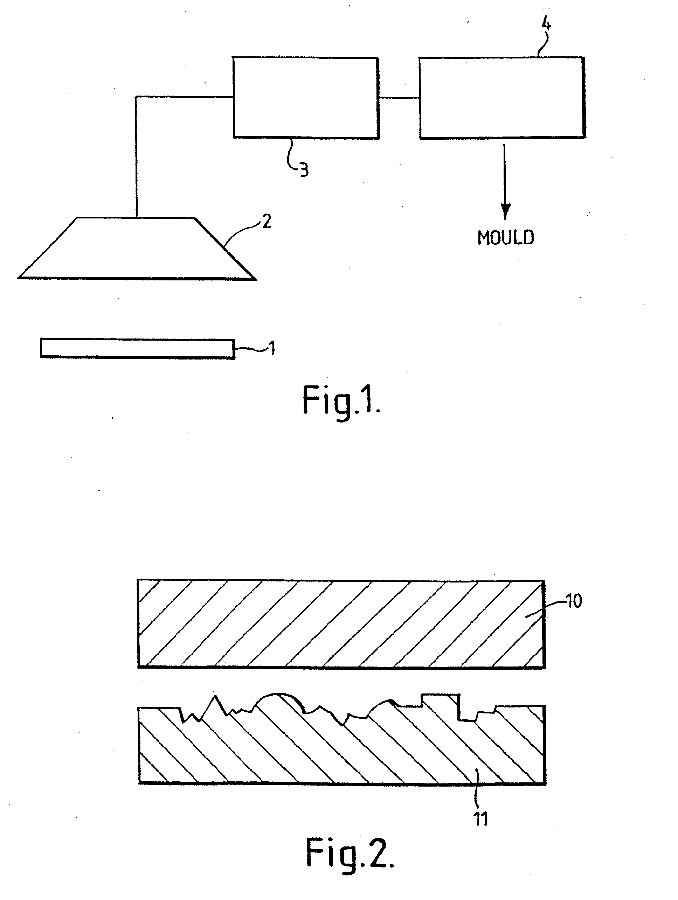

As shown in Figure 1, an image 1, for example a photograph or painting, is scanned by a scanner 2 to convert the image 1 into electronic data which corresponds to the image 1. The data corresponding to the scanned image is input to a processor 3. Alternatively, the image may be generated initially in electronic form, for example using a graphics package, or may be loaded from a store of pre-converted or generated images, for example from a CD-ROM, or downloaded, for example from the Internet.

The processor 3 analyses the data corresponding to the image to determine the relative intensity, i.e. the relative darkness or lightness, at different points or pixels of the image. This analysis may be achieved using commercially available computer aided design or computer aided milling software. This intensity information is provided to a numerically controlled milling machine from the software which is able to use the intensity data to machine one half 11 of a mould in which the depth of the mould at different positions corresponds to the relative intensities of the original image. In a preferred example, the mould has a greater depth where the corresponding position of the original image has a low intensity (i.e. where the image is dark), and has a shallower depth where the corresponding position of the original image has a high density (i.e. where the image is light).

The machined mould half 11 and an associated mould half 10 having a generally flat surface, are placed together to form a mould cavity, and plastics material is injected into the mould cavity. To give the plastics material the required translucent properties, a filler material such as china clay, chalk or other filter material is added to the plastics before this is injected into the mould cavity.

When the plastics material has set, it is removed from the mould. The resulting article will be translucent, and will have a greater thickness in those areas corresponding to darker areas of the original image than the areas corresponding to the lighter areas of the original image. When light is shone through the article from behind, the light is transmitted through the thinner parts of the article more easily than through the thicker parts of the article, and therefore the thinner areas appear lighter than the thicker areas. This corresponds generally to the light and dark areas of the original image, and therefore an image corresponding to the original image can be seen.

The article may be coloured on the back by any suitable printing technique, for example by ink jet printing. In this case, the colour is easy to apply as it is applied to the flat rear surface of the article. The coloured layer on the back of the article acts as a colour filter which only lets light of selected wavelengths pass through the layer and hence through the translucent article, and therefore the light viewed through the article is of certain colours. Where the rear of the article is coloured substantially entirely with a single colour, the whole image viewed through the article will have a colour tint, however it is preferred that the rear of the article is selectively coloured with areas of different colour. This allows the light transmitted through different parts of the article to be of different colours, which may correspond to the colours of the original image.

Alternatively, a coloured pigment may be added to the plastics material before this is injected into the mould. In this case, the pigment within the plastics material will act as a filter to allow only light of certain wavelengths to be transmitted to form the view image.

It is also possible to add a luminescent pigment to the plastics material used to injection mould the article. In this case, it is not necessary for a separate back light to be used to view the article, since the article will itself emit light. In this case, the mould is made in reverse to that described above, with the areas corresponding to the lighter sections of the image being formed more deeply than the areas corresponding to the darker areas. In this case, the plastics article moulded by the mould will be thicker in those areas corresponding to lighter areas of the original image, and therefore will have a greater amount of luminescent pigment, and therefore will emit more light than the thinner areas corresponding to the darker regions of the original image which will have less luminescent material and therefore will emit less light.

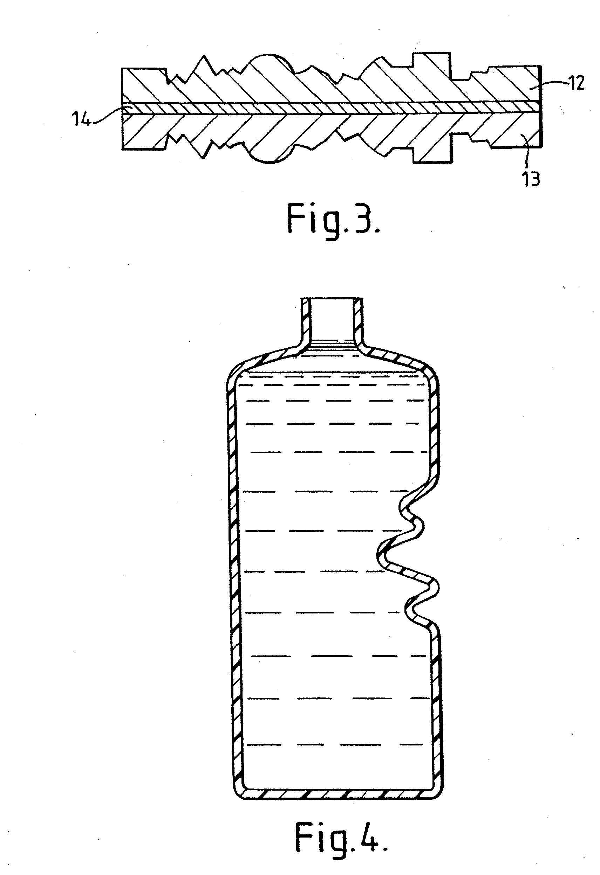

An alternative example of an article according to the present invention is shown in cross-section in Figure 3. In this example, rather than the article being formed with a flat rear surface and a front surface having a relief corresponding to the relative intensity of the different parts of the image, the article is formed with a corresponding relief on both faces. This can be achieved either by forming the two mould halves with a corresponding, mirror image, relief, the relief in each part corresponding to half the required relief for the desired overall thickness of the finished product, or by engraving with a CNC machine.
Alternatively, as shown in the example of Figure 3, the article can be formed in two parts, each part having one flat face and one face with relief, each part made in accordance with any of the methods described herein.
In this case, the two parts of the article are fixed together in back-to-back relation. Due to the variation in thickness of the complete article, there will be a similar transmission of light as with a single article having a flat rear face. However, it is possible to view the image through the article from either side, whereas when one face is flat, it is difficult to view the image from this flat face.

As shown in Figure 3, a coloured layer is printed on the flat face of one part of the article. In the complete article, this layer is sandwiched between the two parts of the article and therefore is not susceptible to damage, for example by wear or scratching. The coloured layer may alternatively or additionally be a luminous layer, in which case it may not be necessary to hold the article to a light source when the image is viewed. The two parts of the article are then joined by a suitable adhesive.

As with the first example, it is possible to provide a coloured or luminescent layer on one face of the article, or to make the article of a plastics material including coloured or luminescent particles.

The injection moulded articles according to the present invention, which, due to the method of manufacture can be formed inexpensively and in large numbers, can be used in many different applications, for example, but not limited to, character promotions, key rings, inserts to be provided in cereal packets, light shades, plates, cups, and pictures.

It may also be possible to form a plastics article having variable thickness or contour corresponding to the relative intensity of an original image by engraving the article directly, for example using a CNC machine, in the same way as described above for forming the mould. In this case, it would be simple to make one-off items, for example it would be possible to convert an image of a person's face into data relating to the relative intensity of the image, and directly engrave a plastics article with different thickness regions corresponding to the different intensities of the image of the person's face. This could be used as a security device, for example as an identification card, which would be very difficult to forge.

In an alternative example, a bottle is formed of transparent material in which the width of the bottle varies to correspond to the relative intensity of an image. When the bottle is filled with liquid, the amount of liquid will correspond to the relative intensity of the original image. Where the liquid is translucent, this variation in the amount of liquid will give darker and lighter regions. A cross-section of a bottle is shown in Figure 4.

## Claims

1. A method of forming an article, the method comprising the steps of:
determining the relative intensity at different points of an image;
forming an article from a translucent material so that the article has a relief such that the thickness corresponds to the different intensities of the image.

2. A method according to Claim 1, in which the article has thicker portions corresponding to the darker regions of the original image, and thinner portions corresponding to the lighter regions of the original image.

3. A method according to Claim 1 or Claim 2, in which the relative intensities of the different points of the original image is determined by scanning the image into a computer.

4. A method according to any preceding claim, in which the image is analysed by dividing this into separate picture elements, and determining the intensity of each picture element.

5. A method according to Claim 4, in which a value corresponding to the intensity of each picture element is stored in memory.

6. A method according to Claim 5, in which the stored values are used to control a computer driven engraving machine to form the article.

7. A method according to any one of the preceding claims, in which the step of forming the article includes the step of forming a mould having a relief corresponding to the relative intensity of the points of the original image and moulding the article from a translucent material in the mould to form an article having different thicknesses corresponding to the different intensities of the original image.

8. A method according to Claim 7, in which the mould is formed of metal.

9. A method according to Claim 7 or 8, in which the step of forming the mould is an engraving step.

10. A method according to any one of Claims 1 to 6, in which the step of forming the article comprises the step of engraving translucent material.

11. A method according to Claim 6, 9 or 10, in which the engraving step is achieved using a numerically controlled engraving machine.

12. A method according to Claim 6, 9 or 10, in which the engraving step is achieved using laser engraving.

13. A method according to any one of the preceding claims, in which the article is formed from a plastics material.

14. A method according to any one of Claims 1 to 12, in which the article is formed from a confectionery material, such as candy or chocolate.

15. A method according to any one of Claims 1 to 12, in which the article is formed from a soap.

16. A method according to any one of Claims 1 to 12, in which the article is formed from a wax.

17. A method according to any one of the preceding claims, in which the material includes luminescent particles.

18. A method according to any one of the preceding claims, including the further step of providing a luminescent layer on or in the article.

19. A method according to any one of the preceding claims, in which the article is formed of a coloured material.

20. A method according to any one of the preceding claims, including the further step of providing a coloured layer on or in the article.

21. A method according to any one of the preceding claims, in which the article is made from a heat sensitive material whose light transmissive properties vary dependent on the temperature of the material.

22. An article formed of a plastics material, the article having different thicknesses at different points corresponding to the relative intensity of an image.

23. An article formed of a confectionery product, such as candy or chocolate, the article having different thicknesses at different points corresponding to the relative intensity of an image.

24. An article formed of soap, the article having different thicknesses at different points corresponding to the relative intensity of an image.

25. An article formed of wax, the article having different thicknesses at different points corresponding to the relative intensity of an image.

26. An article comprising a container containing a liquid, the container being shaped to be of variable width, the width at different points corresponding to the relative intensity of an image.

27. An article according to any one Claims 22 to 26, in which the material includes luminescent particles.

28. An article according to any one of Claims 22 to 27, in which a luminescent layer is provided on or in the article.

29. An article according to any one of Claims 22 to 28, in which the article is formed of a coloured material.

30. An article according to any one of Claims 22 to 29, in which a coloured layer is provided on or in the article.

31. An article according to any one of Claims 22 to 30, in which the article is made from a heat sensitive material whose light transmissive properties vary dependent on the temperature of the material.
